# EUROPÄISCHE PATENTSCHRIFT

(11) **EP 0 512 317 B1**
(45) Veröffentlichungstag und Bekanntmachung des Hinweises auf die Patenterteilung: **03.01.1996**
(21) Anmeldenummer: 92106837.5
(22) Anmeldetag: 22.04.1992
(51) Int. Cl.: G01C 17/38

(54) **Verfahren zur Nachführung des Korrekturwertes eines mit einem Fahrzeug verbundenen Magnetfeldsensors**
Method for tracking the correction value of a magnetic field sensor attached to a vehicle
Procédé pour la poursuite de la valeur de correction d'un détecteur attaché à un véhicule

(30) Priorität: 10.05.1991 DE 4115315
(43) Veröffentlichungstag der Anmeldung: 11.11.1992
(73) Patentinhaber: Mannesmann Kienzle GmbH (HR B1220), D-78052 Villingen-Schwenningen (DE)
(72) Erfinder: Gruler, Martin, Dipl.-Ing.(FH), W-7209 Aixheim (DE); Hilger, Gernot, Dipl.-Phys., W 7218 Trossingen (DE)

(56) Entgegenhaltungen:
- EP-A- 0 067 338
- EP-A- 0 382 290
- EP-A- 0 508 213
- WO-A-85/02902
- WO-A-88/05155
- DE-A- 3 734 057
- DE-A- 4 003 563

## Beschreibung

Die Erfindung betrifft ein Verfahren zur Nachführung des Korrekturwertes eines Magnetfeldsensors, wobei der Magnetfeldsensor
. fest mit einem Fahrzeug verbunden ist,
. mindestens die beiden zueinander orthogonalen, parallel zur Fahrbahnebene des Fahrzeugs liegenden Komponenten von einem ihn umgebenden Magnetfeld sensiert und
. seine Meßdaten an einen elektronischen Speicher liefert, welcher Bestandteil eines in dem Fahrzeug angeordneten Datenerfassungsgerätes ist.

In der EP-A-0 508 213 (Art..54(3,4)EPÜ) ist ein Verfahren und eine Vorrichtung vorgeschlagen worden, die beispielsweise zum Zwecke der Rekonstruktion einer zweidimensionalen Bewegungsbahn eines Fahrzeugs den Flußdichtevektor eines äußeren, stationären Magnetfeldes, in welchem sich das Fahrzeug bewegt, zumindest hinsichtlich der in der Bewegungsebene des Fahrzeugs liegenden Komponenten sensorisch erfassen und die Meßwerte, welche den jeweiligen Raumachsen zugeordnet sind, mittels elektronischer Speicher aufzeichnen sowie auf diese Weise Basisdaten bereitstellen, aus denen zumeist unter Zuhilfenahme weiterer Fahrzeugbewegungsdaten die Bewegungsbahn des Fahrzeugs ermittelt werden kann.

Die den beiden Raumachsen der Bewegungsebene zugeordneten, magnetfeldabhängigen Meßwerte werden z. B. als ein aus den Frequenzsignalen f1 und f2 bestehendes Meßwertpaar (fl; f2) taktgesteuert nach ihrer Digitalisierung in einem Matrixspeicher registriert, dessen Speicherzellenkonfiguration eine vorzugsweise quadratische Netzebene abbildet. Die während des Fahrzeugbetriebs fortlaufend ermittelten Meßwertpaare werden jeweils derjenigen Speicherzelle zugeordnet, in deren Rasterfeld die Beträge der Meßwerte in Analogie zu einem Koordinatenpaar fallen, und in der jeweiligen Speicherzelle durch De- oder Inkrementierung eines Zählers als Ereignishäufigkeit erfaßt. Dieses Datenerfassungs- und Aufzeichnungsverfahren führt dazu, daß im Matrixspeicher nach einer vollständigen Drehung der fahrzeuggebundenen Meßeinrichtung eine ringförmige Häufigkeitsverteilung entsteht. Für die Bewegungsbahn-Rekonstruktion ist im allgemeinen die Ermittlung des Mittelpunktes dieser geometrischen, zumeist elliptischen Figur erforderlich, was aber in der Regel mit nicht im Fahrzeug angeordneten Mitteln erfolgt, um unter anderem auch aus Kostengründen im Fahrzeug keine allzu große Rechnerleistung installieren zu müssen.

Aufgrund der Wechselwirkung mit ihrer elektromagnetischen Umwelt im Nah- und Fernfeld sowie zufolge von Magnetfeldverzerrungen am Meßort und von Veränderungen in den Eigenschaften der verwendeten Bauteile liefert die Meßeinrichtung jedoch unter den üblichen Betriebsbedingungen eines Fahrzeugs Meßdaten, die zu einer ständigen Verschiebung der Mittelpunktslage der durch die Häufigkeitsverteilung gebildeten ringförmigen Figur führen, wodurch unter Umständen Information verloren geht, wenn der Meßwertekreis, wie die ringförmige Figur im nachfolgenden der Einfachheit halber genannt wird, sozusagen aus der aus einer begrenzten Anzahl von Speicherzellen bestehenden Rasterebene des Matrixspeichers hinausläuft. Diese unter fahrzeugtypischen Betriebsbedingungen unvermeidlichen, störenden Beeinflussungen bedingen zumeist eine fahrzeugspezifische Einmessung sowie eine regelmäßige Nachkalibrierung der Meßeinrichtung, was in der Praxis zu einem unvertretbaren Aufwand führt.

Nachteilig ist auch, daß selbst ein mittig in der Rasterebene liegender Meßwertekreis, dessen Durchmesser jedoch von der Stärke der sensierten Flußdichte abhängt und damit z. B. zufolge sich ändernder magnetischer Abschirmung Schwankungen unterworfen ist, die Netzebene im allgemeinen flächenmäßig nicht optimal ausnutzt und dadurch weite Speicherbereiche des Matrixspeichers ungenutzt bleiben. Beide Nachteile führen dazu, daß im Matrixspeicher eine sehr hohe Speicherkapazität vorgehalten werden muß, was für fahrzeugtechnische und damit kostensensible Anwendungen ungünstig, wenn nicht sogar völlig unpraktikabel ist.

Überdies wird in dem Dokument DE 37 34 057 Al ein Richtungssucher mit einer Korrekturwert-Berichtigungseinrichtung beschrieben, wobei die horizontale Komponente des Erdmagnetismus als ein Paar von zueinander senkrechten Magnetfeld-Komponenten sensorisch erfaßt wird. Aus den fortlaufend erfaßten Signalen wird eine Ortskurve berechnet. Es werden die Mittelpunktskoordinaten und die Radien der Hauptachsen der Ortskurve berechnet. Diese Parameter werden in komplizierten Rechenschritten zur Korrektur der nachfolgend erfaßten Meßwerte benutzt. Die hier beschriebenen Rechenschritte sind mit einem einfachen und damit sehr preiswerten Mikroprozessor entweder gar nicht oder nur mit einem hohen Zeitaufwand durchführbar. Deshalb eignet sich die in DE 37 34 057 Al vorgeschlagene Lösung für viele Anwendungen nicht.

Das Dokument DE 40 03 563 Al beinhaltet eine Vorrichtung zur Messung der Fahrtrichtung eines Fahrzeugs, worin in Abhängigkeit vom Magnetisierungszustand des Fahrzeugs der Bezugspunkt korrigiert wird. Auch hier sind für die Korrektur aufwendige Rechenschritte nötig, die eine nicht unerhebliche Rechnerleistung erfordern.

Das Dokument EP 0 067 338 A2 zeigt ein Korrekturverfahren und eine Korrektureinrichtung für eine Magnetfeldsonde, worin man aus einem singulären Kalibriervorgang einen Korrekturwert ermittelt, der bei der Navigation zu den Meßwerten addiert wird. Eine fortlaufende Nachregelung des Korrekturwertes erfolgt nicht. Dieses Verfahren kann daher die bei vielen Anwendungen gestellten Genauigkeitsanforderungen hinsichtlich der Meßwertregistrierung nicht erfüllen, weil überlagernde Störeinflüsse nicht genügend beseitigt werden.

Der Erfindung liegt daher die Aufgabe zugrunde, ein Verfahren aufzuzeigen, daß den Korrekturwert eines Magnetfeldsensors mit geringem Speicheraufwand und mit sehr einfachen elektronisch ausführbaren Rechenoperationen nachführbar macht.

Die erfindungsgemäße Lösung -wie im Patentanspruch 1 angegeben- besteht zunächst darin, daß von allen Meßdaten vor ihrem Einlesen in den Matrixspeicher ein in einem Regelkreis nachgeführter Korrekturwert subtrahiert wird.

Im Ergebnis wird dadurch erreicht, daß der Mittelpunkt des Meßwertekreises stets in Richtung des idealen Sollwertes in der geometrischen Mitte der netzebene geführt wird und jeder Tendenz, davon abzuweichen, automatisch entgegengewirkt wird. Auf diese Weise wird die im Fahrzeug für den Matrixspeicher benötigte Speicherkapazität sehr gering gehalten und die Gefahr des Informationsverlustes durch einen über die Netzebene hinausdriftenden Meßwertekreis vermieden.

Da das einleitend beschriebene und hier vorausgesetzte Datenerfassungsverfahren die Mittelpunktskoordinaten des jeweils aktuellen Meßwertekreises nicht direkt bereitstellt, werden diese für die Nachführung des Korrekturwertes benötigten Koordinaten fortlaufend oder zumindest einmal innerhalb vorgegebener Zeitintervalle aus den ständig in den Matrixspeicher eingelesenen Meßwerten derart ermittelt, daß alle in den Speicherzellen der Netzebene eingeschriebenen Ereignishäufigkeiten sowohl zeilenweise als auch spaltenweise aufsummiert werden, wodurch sich an den beiden Achsen der Netzebene charakteristische Profile für die summierten Ereignishäufigkeiten ergeben, für beide Achsen getrennt die Skalenwerte der Flanken dieser Profile durch die Abfrage ermittelt werden, an welcher Stelle die Summenwerte erst- bzw. letztmals einen zuvor festgelegten Schwellwert überschreiten, aus den beiden derart aus den Projektionsprofilen ermittelten Skalenwerten für beide Achsen der Netzebene die Mittelpunkte der durch die Flankenwerte begrenzten Intervalle durch Bildung des arithmetischen Mittelwertes berechnet werden und die beiden Skalenwerte der Intervallmitten ein Koordinatenpaar bilden, welches die aktuelle Lage des Mittelpunktes des Meßwertekreises angibt.

Die beiden Komponenten dieses Koordinatenpaares werden mit den Sollmittelpunktskoordinaten, die vorzugsweise im Zentrum der Netzebene liegen, verglichen. Führt der Vergleich zu einer Regelabweichung, wird der Korrekturwert als zu regelnde Größe verändert. Um die aktuellen Mittelpunktskoordinaten den Sollwertkoordinaten anzupassen, wird also der bisherige Korrekturwert für beide Achsen nachgeregelt. Der Korrekturwert kann damit als ein zweidimensionaler Verschiebungsvektor dargestellt werden, um die aus den aktuellen Meßdaten ermittelten Mittelpunktskoordinaten in die Sollmittelpunktskoordinaten, die vorzugsweise den geometrischen Mittelpunkt der Netzebene kennzeichnen, zu überführen. Von allen folgenden Meßwertpaaren wird fortan der in der zuvor beschriebenen Weise korrigierte Korrekturwert solange subtrahiert, bis eine erneute Anpassung des Korrekturwertes erforderlich wird.

Der Vollständigkeit halber sei erwähnt, daß der bei der ersten Inbetriebnahme geltende Korrekturwert durch einen Wert, der während der Herstellung der Vorrichtung ermittelt wird, werksseitig vorgegeben wird. Das Verfahren, welches bei der ersten Initialisierung zur Festlegung des als Regelgröße benutzten Korrekturwertes verwendet wird, ist dadurch gekennzeichnet, daß die komplette Vorrichtung, die die für die Rekonstruktion einer ungeradlinigen Bewegungsbahn eines Fahrzeugs relevanten Daten erfaßt und speichert und dazu eine magnetfeldsensierende Meßeinrichtung, einen Matrixspeicher und eine Regeleinrichtung zum Nachführen eines Korrekturwertes zum Zwecke der automatischen Lagestabilisierung eines in den Matrixspeicher eingelesenen Meßwertekreises enthält, in beliebiger Orientierung in eine waagerechte Lage gebracht wird, mit der magnetfeldsensierenden Meßeinrichtung eine erste Feldmessung durchgeführt wird und die Meßdaten nach ihrer Digitalisierung in einem Matrixspeicher registriert werden, sodann die gesamte Vorrichtung in der waagrechten Lage um 180° gedreht wird, eine zweite Feldmessung mit anschließender Digitalisierung und Registrierung der Meßdaten erfolgt, anschließend zum Zwecke der vereinfachten Mittelpunktsbestimmung des in seiner Lage durch die beiden Meßpunkte fixierten "Meßwertekreises" achsweise der arithmetische Mittelwert von beiden Meßpunkten ermittelt wird und der Verschiebungsvektor zwischen den derart ermittelten Mittelpunktskoordinaten und den im Zentrum der Netzebene liegenden Sollmittelpunktskoordinaten den Korrekturwert der Initialisierung bildet.

Weder bei der Installation der Vorrichtung im Fahrzeug noch nach bestimmten Betriebszeiten ist ein Hardware-Abgleich, eine besondere Kalibrierung oder eine fahrzeugspezifische Einmessung erforderlich, da die Vorrichtung, die nach dem oben beschriebenen Verfahren Daten zur Rekonstruktion einer ungeradlinigen Bewegung eines Fahrzeugs erfaßt, sich durch die erfindungsgemäßen Verfahren prinzipbedingt von selbst seiner jeweiligen Umgebung anpaßt.

Nachfolgend soll die Erfindung anhand von einigen Figuren noch näher erläutert werden. Es zeigen
- Fig. 1: eine Veranschaulichung des Problems, das für Vorrichtungen der genannten Art unter fahrzeugtypischen Umgebungseinflüssen gegeben ist,
- Fig. 2: das Prinzip der Lagestabilisierung des Meßwertekreises,
- Fig. 3: das Verfahren zur Mittelpunktsbestimmung eines driftenden Meßwertekreises,
- Fig. 4: eine Darstellung des Verfahrens zur Ermittlung des Korrekturwertes bei der Initialisierung,
- Fig. 5: ein Blockschaltbild des Regelkreises zur Nachführung des Korrekturwertes.

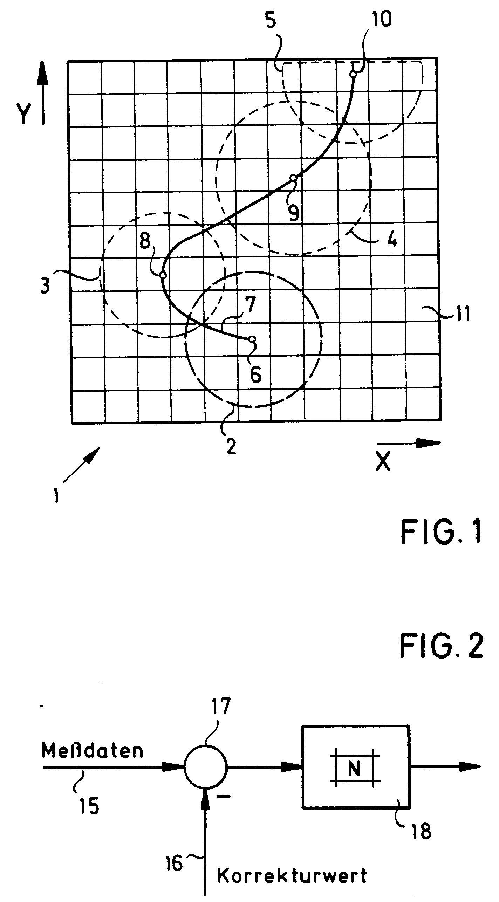

In Fig. 1 ist ein in der Netzebene 1 eines Matrixspeichers 18 aufgezeichneter Meßwertekreis 2 dargestellt. Während des Betriebs der Vorrichtung, die die für die Rekonstruktion der ungeradlinigen Bewegungsbahn eines Fahrzeugs relevanten Daten erfaßt und speichert, kann der Meßwertekreis 2 zufolge von Umgebungseinflüssen und Veränderungen in den Eigenschaften der in der Meßeinrichtung verwendeten Bauteile seine Lage verändern (z. B. 3, 4, 5), wodurch der Mittelpunkt 6 z. B. auf der Kurve 7 entlangwandert und z. B. die Koordinaten 8, 9 oder 10 annimmt. Unter Umständen kann der Meßwertekreis auch teilweise oder vollständig aus der Netzebene hinauslaufen, siehe 5, wodurch Meßpunkte verloren gehen können. Meßwerte, die außerhalb der Rasterebene liegen, werden in den Speicherzellen am Rand der Netzebene registriert. Außerdem zeigt diese Figur, wie sich z. B. der Durchmesser des Meßwertekreises zufolge unterschiedlicher magnetischer Feldstärken während des Betriebs der Vorrichtung verändern kann, wodurch eine mehr oder weniger gute, flächenmäßige Ausnutzung der Netzebene erfolgt.

Fig. 2 erläutert das Prinzip zur Lagestabilisierung des Meßwertekreises 21. Von allen zur Einlesung in den Matrixspeicher 18 anstehenden Meßdaten 15 wird in einer Subtrahierstelle 17 ein in einem Regelkreis nachgeführter Korrekturwert 16 komponentenweise subtrahiert. Nur derart bereinigte Meßwerte gelangen fortan zur Abspeicherung in den Matrixspeicher 18.

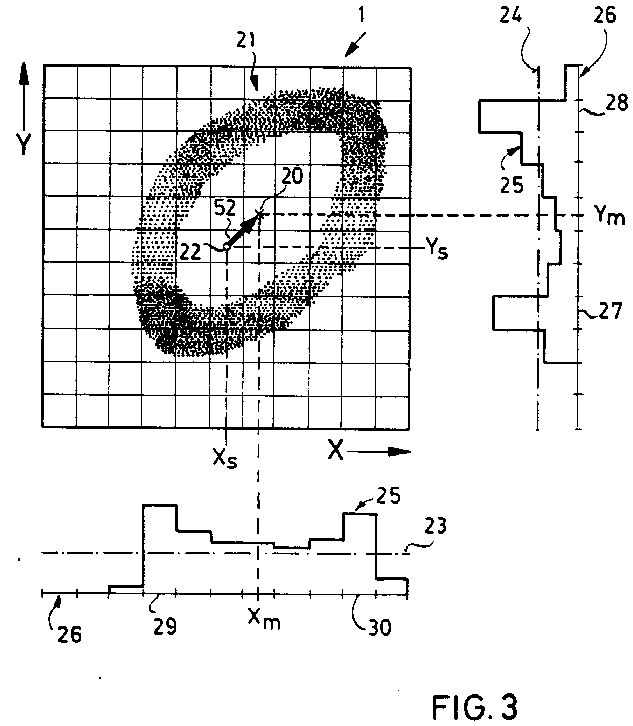

Fig. 3 veranschaulicht das Verfahren zur Ermittlung des Mittelpunktes 20 eines fortlaufend durch Meßpunkte gebildeten Meßwertekreises 21, der von der ursprünglichen Mittelpunktslage 22 bereits abgedriftet ist. In den Speicherzellen der Netzebene 1 des Matrixspeichers 18 werden die von der magnetfeldsensierenden Meßeinrichtung erfaßten und digitalisierten Meßwerte als Ereignishäufigkeit durch Setzen eines Zählers registriert. Die Zuordnung der Meßwerte zu den Speicherzellen erfolgt in Analogie zur Eintragung von Meßpunkten in ein kartesisches Koordinatensystem. Die Zählerstände aller Speicherzellen werden zeilenweise und spaltenweise aufaddiert, wodurch sich für beide Achsen der Netzebene charakteristische Profile für die summierten Ereignishäufigkeiten ergeben. Nun werden zur Bestimmung der Profilflanken die Zählerstände, z. B. 25, in jedem Skalenteil, z. B. 26, mit einem für jede Achse zuvor festgelegten Schwellwert 23, 24 verglichen und so diejenigen Skalenwerte ermittelt, bei denen die Summenwerte erstmals (27, 29) bzw. letztmals (28,30) auf der betreffenden Achse den Schwellwert (23, 24) überschreiten. Durch Bildung des arithmetischen Mittelwertes über die Flankenskalenwerte jeder Achse werden die Mittelpunktskoordinaten (Xm; Ym) des aktuellen Meßwertekreises bestimmt. Durch Bildung der Differenz zwischen den neuen Mittelpunktskoordinaten 20 und den Sollmittelpunktskoordinaten 22 mit den Komponenten Xs und Ys wird der Verschiebungsvektor 52, d. h. der neue Korrekturwert ermittelt.

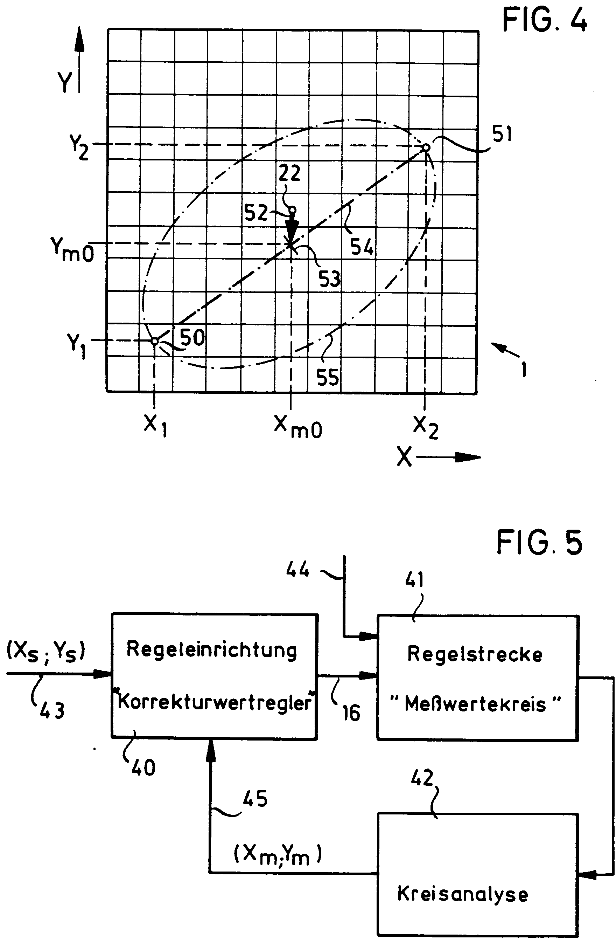

Fig. 4 erläutert das Verfahren, mit dem vor Auslieferung der Vorrichtung der genannten Art, d. h. also in der Regel beim Hersteller, ein Korrekturwert zur Initialisierung der Regelschleife ermittelt wird. Die komplette Vorrichtung, die eine magnetfeldsensierende Meßeinrichtung, einen Matrixspeicher und eine den Korrekturwert nachführende Regeleinrichtung enthält wird in beliebiger Orientierung in eine waagrechte Lage gebracht. Es werden die Magnetfelddaten mit der Meßeinrichtung der Vorrichtung erfaßt und nach ihrer Digitalisierung in den Matrixspeicher 18 eingelesen, was zur Folge hat, daß in der Speicherzelle, z. B. 50, die Meßwertpaar zugeordnet ist, der Zählerstand um Eins verändert wird. Anschließend wird die gesamte Vorrichtung um 180° um die Hochachse gedreht und ein zweiter Meßpunkt 51 aufgenommen, der in gleicher Weise abgespeichert wird. Dabei habe der erste Meßpunkt in der Netzebene 1 die Koordinaten (X1; Y1) und der zweite Meßpunkt (X2; Y2). Achsweise wird nun der arithmetische Mittelwert über diese Koordinaten ermittelt, wodurch der Mittelpunkt 53 der Strecke 54 zwischen den beiden Meßpunkten 50, 51 bestimmt ist. Die Mittelpunktskoordinaten seien in diesem Beispiel (Xm0; Ym0). Diese Koordinatenwerte werden zur Festlegung des Korrekturwertes, der sich als der Verschiebungsvektor 52 zwischen den ermittelten Mittelpunktskoordinaten 53 und den im Zentrum der Netzebene 1 liegenden Sollmittelpunktskoordinaten 22 darstellt, für die Initialisierung benutzt.

Es sei angemerkt, daß man einen geschlossenen Meßkreis 55 erhalten würde, wenn die Vorrichtung in vielen kleinen Schritten mit ständiger Feldmessung und Datenspeicherung vollständig um die Hochachse gedreht würde. Für die Mittelpunktsbestimmung zur Festlegung des Korrekturwertes für die Initialisierung ist jedoch diese im Fertigungsprozeß auch vollautomatisch durchführbare, vereinfachte "Kreiserkennung" mittels zweier, diametral gegenüberliegender Meßpunkte ausreichend.

Fig. 5 zeigt ein vereinfachtes Blockschaltbild des Regelkreises zur Nachführung des Korrekturwertes 16. Die Regelstrecke 41 ist der fortlaufend durch die störgrößenbehafteten Meßdaten 44 gebildete und Lage- sowie Formveränderungen unterworfene Meßwertekreis 21, wobei die Koordinaten des Mittelpunktes 20 im Rückkopplungszweig 45 mittels einer Kreisanalyse 42 ermittelt werden. In der Praxis sind die von der Meßeinrichtung erfaßten Meßdaten unvermeidlich von Störgrößen beeinflußt. Der daraus resultierenden Tendenz zur Lageänderung des Mittelpunktes 20 des Meßwertekreises 21 wird dadurch entgegengewirkt, daß in der Regeleinrichtung 40 ein Korrekturwert 16 gebildet wird, so daß der Mittelpunkt 20 des Meßwertekreises 21 stets zum Zentrum 22 der Netzebene 1 zurückgeführt wird.

In der bevorzugten Ausführung ist die Regeleinrichtung durch einen Mikroprozessor realisiert. In einer vorteilhaften Weiterbildung der erfindungsgemäßen Lösung sind Mittel zur Zeitsteuerung vorgesehen, die sicherstellen, daß der Regelzyklus innerhalb vorgegebener Zeitintervalle, z. B. täglich, mindestens einmal durchlaufen wird. Bei sehr geringfügigen Meßdatenveränderungen könnte andernfalls über längere Zeit eine Korrekturwertanpassung ausbleiben. Durch die z. B. täglich ausgelöste Kontrollroutine werden auch langsame, z. B. durch Bauteilealterung verursachte und auch während Stillstandszeiten des Fahrzeugs voranschreitende Veränderungen der Mittelpunktslage erkannt und korrigiert, was zur Erhöhung der Meßgenauigkeit beiträgt.

Neben der Automatisierbarkeit hat das Verfahren zur Bestimmung der Mittelpunktskoordinaten eines Meßwertekreises, das während des Betriebs der Vorrichtung, d. h. nach ihrer Installation im Fahrzeug zum Einsatz kommt, den Vorteil, keinerlei Hardware-Abgleich zu erfordern.

Die hier beschriebenen Verfahren zur Datenerfassung mit Meßwertekreislagestabilisierung führen dazu, daß die Meßdaten stets um die durch Störgrößen verursachte Beeinflussung bereinigt im Matrixspeicher registriert und Regelabweichungen überprüft werden, was im Ergebnis bedeutet, daß nur eine geringe Speicherkapazität für den Matrixspeicher vorgehalten werden muß, die vorhandene Speicherkapazität vorteilhaft ausgenutzt und ein Informationsverlust durch einen wegdriftenden Meßwertekreis vermieden wird.

## Patentansprüche

1. Verfahren zur Nachführung des Korrekturwertes (16) eines Magnetfeldsensors,
. der fest mit einem Fahrzeug verbunden ist,
. der mindestens die beiden zueinander orthogonalen, parallel zur Fahrbahnebene des Fahrzeugs liegenden Komponenten von einem ihn umgebenden Magnetfeld sensiert und
. der seine Meßdaten (15) an einen elektronischen Speicher (18) liefert, welcher Bestandteil eines in dem Fahrzeug angeordneten Datenerfassungsgerätes ist,
wobei
der Korrekturwert (16) von allen von dem Magnetfeldsensor erfaßten Meßdaten (15) an einer Subtrahierstelle (17) subtrahiert wird und
die Nachführung in einem Regelkreis (40, 41, 42) erfolgt, wobei der Korrekturwert (15) als zu regelnde Größe dadurch bestimmt wird,
a. daß in dem Speicher (18) jeder Erfassungsrichtung des Magnetfeldsensors jeweils eine bestimmte Anzahl Speicherzellen zugeordnet wird, wobei jede Speicherzelle (11) einem bestimmten Wertebereich (26) der Meßdaten (15) zugeordnet ist;
b. daß in jeder Speicherzelle gezählt wird, wie häufig innerhalb eines bestimmten Betrachtungszeitraums Meßdaten (15) des dieser Speicherzelle (11) zugeordneten Wertebereichs auftreten;
c. daß zur Bildung der Regelgröße die Zählerstände (25) aller Speicherzellen jeweils getrennt für jede Erfassungsrichtung aufsummiert werden;
d. daß durch Vergleich ermittelt wird, an welcher Stelle (27, 28, 29, 30) des Meßbereichs die Zählerstände (25) erstmals bzw. letztmals einen zuvor festgelegten Schwellwert (23, 24) überschreiten;
e. daß für jede Erfassungsrichtung diejenige Speicherzelle (20) ermittelt wird, die in der Mitte (Xm, Ym) des durch die erstmalige bzw. letztmalige Schwellwertüberschreitung gefundenen Intervalls liegt; und
f. daß der Vektor (52), der sich aus der Differenz zwischen den aktuellen Intervallmitten (Xm, Ym) und den im Zentrum des Meßbereichs liegenden Sollmittelpunkten (Xs, Ys) ergibt, der neue Korrekturwert (16) ist, der anstelle des früheren Korrekturwerts gesetzt wird.

2. Verfahren nach Anspruch 1, dadurch gekennzeichnet, daß der Regelkreis zeitabhängig gesteuert wird, um sicherzustellen, daß der Regelzyklus mindestens einmal innerhalb vorgegebener Zeitintervalle durchlaufen wird.

## Claims

1. A process for updating the compensation value (16) of a magnetic field sensor,
. which is fixedly connected to a vehicle,
. which senses at least the two components of a magnetic field surrounding it which are mutually at right angles and lie parallel to the plane of the roadway of the vehicle and
. which supplies its measured data (15) to an electronic store (18) which is part of a data capture device arranged in the vehicle,
the compensation value (16) of all the measured data (15) detected by the magnetic field sensor being subtracted at a subtraction location (17) and
the updating taking place in a control loop (40, 41, 42), the compensation value (15) as the variable to be regulated being determined in that
a. in the store (18) in each case a certain number of memory cells is associated with each detection direction of the magnetic field sensor, each memory cell (11) being associated with a certain value range (26) of the measured data (15);
b. in each memory cell a count is made of how often within a certain observation period measured data (15) of the value range associated with this memory cell (11) occur;
c. to form the control variable the counter levels (25) of all the memory cells are each separately totalled for each detection direction;
d. the point (27, 28, 29, 30) of the measurement range at which the counter levels (25) first and last exceed a previously established threshold value (23, 24) is determined by comparison;
e. for each detection direction the memory cell (20) which lies in the centre (Xm, Ym) of the interval defined by the first and last exceeding of the threshold value is determined; and
f. the vector (52) which results from the difference between the current interval centres (Xm, Ym) and the set centre points (Xs, Ys) lying in the centre of the measurement range is the new compensation value (16), which replaces the earlier compensation value.

2. A process according to Claim 1, characterized in that the control loop is controlled in dependence on time in order to ensure that the regulating cycle is run through at least once within predetermined time intervals.

## Revendications

1. Procédé pour l'asservissement de la valeur corrective (16) d'un détecteur de champ magnétique, ledit détecteur de champ magnétique
o étant rigidement relié à un véhicule,
o détectant au moins les deux composantes, situées orthogonalement l'une par rapport à l'autre et parallèlement par rapport au plan de la piste de roulage du véhicule, d'un champ magnétique qui l'entoure et
o fournissant ses paramètres de mesure (15) à une mémoire électronique (18) qui appartient à un appareil d'acquisition de données disposé dans le véhicule caractérisé par le fait
que la valeur correctrice (16) de tous les paramètres de mesure (15) acquis par le détecteur de champ magnétique sera soustraite à un point de soustraction (17) et
que l'asservissement se fait dans un circuit de réglage (40, 41, 42), la valeur corrective (15), comme grandeur à régler, étant déterminée par le fait
a. que, dans la mémoire (18), à chaque direction d'acquisition du détecteur de champ magnétique est respectivement associé un nombre déterminé de cellules de mémoire, chaque cellule de mémoire (11) étant associée à une gamme de valeurs déterminée (26) des paramètres de mesure (15) ;
b. que, dans chaque cellule de mémoire a lieu un comptage de la fréquence d'apparition, dans les limites d'un espace de temps d'observation déterminé, de paramètres de mesure (15) de la gamme de valeurs associée à cette cellule de mémoire (11) ;
c. que, pour la formation de la grandeur à régler, les cotes de compteur (25) de toutes les cellules de mémoire sont toujours totalisées séparément pour chaque direction d'acquisition ;
d. qu'il est déterminé, par comparaison, l'endroit (27, 28, 29, 30) de la gamme de mesure où, pour la première fois ou la dernière fois, les cotes de compteur (25) dépassent une valeur de seuil (23, 24) fixée à l'avance ;
e. qu'il est déterminé, pour chaque direction d'acquisition, celle (20) des cellules de mémoire qui est située au centre (Xm, Ym) de l'intervalle trouvé par le premier ou le dernier dépassement de valeur de seuil ; et
f. que le vecteur (52), qui résulte de la différence entre les centres d'intervalle actuels (Xm, Ym) et les centres de référence (Xs, Ys) situés au centre de la gamme de mesure, est la nouvelle valeur corrective (16) qui sera mise à la place de l'ancienne valeur corrective.

2. Procédé selon la revendication 1,
caractérisé par le fait
que le circuit de réglage est commandé en fonction du temps pour assurer que le cycle de réglage sera parcouru au moins une fois dans les limites d'intervalles de temps prédéterminés.
